# EUROPÄISCHE PATENTANMELDUNG

(11) **EP 3 048 149 A1**
(43) Veröffentlichungstag der Anmeldung: **27.07.2016**
(21) Anmeldenummer: 16152840.1
(22) Anmeldetag: 26.01.2016
(51) Int. Cl.: C09J 7/02

(54) **SCHUTZEINRICHTUNG FÜR LANGGESTRECKTE OBJEKTE**

(30) Priorität: 26.01.2015 DE 202015100345 U
(71) Anmelder: tremco illbruck Produktion GmbH, 92439 Bodenwöhr (DE)
(72) Erfinder: HNIZDIL, Ales, 16400 Praha 6 - Nebusice (CZ); KOMMA, Markus, 93133 Burglengenfeld (DE)
(74) Vertreter: Bittner, Bernhard

(57) **Zusammenfassung**

Die vorliegende Erfindung betrifft eine Schutzeinrichtung für langgestreckte Objekte (3), wobei die Schutzeinrichtung (1) ein Klebeband (10) umfasst oder in Form eines Klebebandes (10) ausgebildet ist, wobei das Klebeband (10) durch zwei in Bandlängsrichtung (L) verlaufende Seitenkanten (11) mit angrenzenden Seitenkantenbereichen (13) und durch zwei Stirnkanten (12), welche an gegenüberliegenden Enden des Klebebandes (10) angeordnet sind, begrenzt ist, wobei das Klebeband (10) eine Trägerschicht (15) aufweist und auf einer Seite der Trägerschicht (15) eine außenseitig an dem Klebeband (10) angeordnete Klebeschicht (16) aufweist, wobei das Klebeband (10) dimensioniert ist, um in Schutzanordnung um das langgestreckte Objekt (3) dieses quer zu der Objektlängsrichtung einlagig zu umwickeln, so dass im Wickel die Stirnkanten des Klebebandes das langgestreckte Objekt schlaufenförmig umfassen und die Seitenkanten des Klebebandes zumindest im Wesentlichen längs zueinander und längs zur Längsrichtung des langgestreckten Objektes angeordnet sind und wobei die beiden Seitenkantenbereiche (11) des Klebebandes (10) mittels der auf einer Seite des Klebebandes (10) angeordneten Klebeschicht (16) miteinander unter Ausbildung eines Kontaktes Klebeschicht-Klebeschicht (16) verhaftet sind, wobei die Klebeschicht (16) von beiden Seitenkanten (11) des Klebebandes (10) beabstandet angeordnet ist.

## Beschreibung

Die Erfindung betrifft eine Schutzeinrichtung für langgestreckte Objekte wie Kabel, Leitungen oder langgestreckte Profile gemäß dem Oberbegriff von Anspruch 1.

Derartige Schutzeinrichtungen umfassend ein oder in Form eines Klebebandes mit Trägerschicht und Klebeschicht werden eingesetzt, um zumindest ein langgestrecktes Objekt oder in der Regel Bündel langgestreckter Objekte durch Öffnungen von Bauteilen oder ggf. außenseitig an Bauteilen von Vorrichtungen zu führen. Hierbei sollen einerseits die langgestreckten Objekte geschützt werden, beispielsweise gegen Durchscheuern durch Kontakt mit dem jeweiligen Bauteil, insbesondere wenn das jeweilige Bauteil Erschütterungen ausgesetzt ist oder Teil einer beweglichen Einrichtung wie eines Kraftfahrzeuges ist. Ferner soll durch die Schutzeinrichtung vermieden werden, dass bei der Bewegung der Einrichtung Geräusche dadurch auftreten, dass das langgestreckte Objekt mit dem dieses aufnehmenden Bauteil in Berührung kommt, wie beispielsweise zur Vermeidung von Klappergeräuschen oder dergleichen. Eine entsprechende Anwendung der Schutzeinrichtung kann auch gegeben sein, wenn auf das langgestreckte Objekt Kräfte ausgeübt werden, welche zu einer gewissen Lageveränderung zu dem das Objekt aufnehmenden Bauteil führen, was ebenfalls zu einem Durchscheuern des langgestreckten Objektes oder zu unerwünschten Geräuschen führen kann.

Eine derartige Schutzeinrichtung in Form eines Klebebandes ist beispielsweise aus der DE 197 32 958 A1 bekannt.

Gattungsgemäße Schutzeinrichtungen haben sich zur Vermeidung eines Durchscheuerns bzw. Beschädigung der langgestreckten Objekte und Vermeidung unerwünschter Geräusche wie Klappergeräusche an sich bewährt. Es stellt sich aber das Problem, dass sich beim Betrieb der entsprechenden Vorrichtung in unerwünschter Weise Schmutzpartikel oder sonstige Partikel an den Seitenbereichen bzw. Seitenkanten der Schutzeinrichtung anhaften, insbesondere bei längerem Betrieb der jeweiligen Vorrichtung wie einem Fahrzeug, welches mit der Schutzeinrichtung ausgerüstet ist. Die Schmutz- oder Fremdpartikel haften hierbei an dem Klebematerial der Klebeschicht an, welche seitlich von der Schutzeinrichtung vorstehen oder bei nicht sachgemäßer Anbringung der Schutzeinrichtung, also bei nicht exakt kongruenter Anordnung der beiden Enden der Schutzeinrichtung zueinander außenseitig freiliegen. Selbst wenn bei sorgfältiger Montage der Schutzeinrichtung die beiden Seitenkantenbereiche des Klebebandes kongruent zueinander angeordnet werden, kann es zu derartigem freiliegenden Klebematerial führen, beispielsweise wenn auf die beiden Seitenkantenbereiche der Schutzeinrichtung Scherkräfte ausgeübt werden, wie sie bei einem Betrieb eines Fahrzeuges nicht gänzlich vermieden werden können. Dies wird dadurch befördert, dass die beiden Seitenkantenbereiche des Klebebandes miteinander durch einen Kontakt Klebeschicht-Klebeschicht verhaftet sind, da durch eine Verschiebung der Klebeschichten im Verhaftungsbereich zueinander eintreten kann. Ferner kann durch das freiliegende Klebemittel der Klebeschicht das langgestreckte Objekt verschmutzen, was einen Austausch des Objektes erschweren kann.

Es versteht sich, dass das oben genannte Problem auch auftreten kann, wenn die Schutzeinrichtung an einem Bauteil, insbesondere einem Bauteil eines Fahrzeuges, gehaltert ist, wobei das langgestreckte Objekt sich über die Oberfläche des Bauteils hinzieht, also nicht durch eine Durchbrechung des Bauteils geführt ist. Im Falle von Durchbrechungen treten die genannten Probleme jedoch besonders verstärkt auf.

Der Erfindung liegt somit die Aufgabe zu Grunde, eine gattungsgemäße Schutzeinrichtung für langgestreckte Objekte zu schaffen, bei welcher insbesondere bei Anordnung der Schutzeinrichtung an einem Bauteil einer bewegten Einrichtung die Schutzeinrichtung vor Anhaftung von Schmutz- oder Fremdpartikeln geschützt ist, wobei die Schutzeinrichtung konstruktiv einfach aufgebaut und kostengünstig herstellbar sowie einfach handhabbar ist.

Die Aufgabe wird erfindungsgemäß durch eine Schutzeinrichtung gelöst, bei welcher die Klebeschicht von beiden Seitenkanten des Klebebandes beabstandet angeordnet ist. Auch dann, wenn die beiden Seitenkantenbereiche des Klebebandes nicht kongruent zueinander angeordnet sind, beispielsweise bei nicht ganz sachgemäßer Montage der Schutzeinrichtung oder bei einem seitlichen Verschieben der beiden Seitenkantenbereiche des Klebebandes zueinander, beispielsweise aufgrund von Bewegungen der mit der Schutzeinrichtung ausgerüsteten Vorrichtung wie einem Fahrzeug, wir hierdurch bewirkt, dass die Klebeschicht bzw. Material der Klebeschicht nicht frei liegt, beispielsweise nicht seitlich von der Schutzeinrichtung austritt und zuverlässig von der Trägerschicht abgedeckt wird. Zugleich wird hierdurch vermieden, dass bei geringfügiger Lageveränderung der Schutzeinrichtung zu dem von dieser umfassten langgestreckten Objekt, nämlich in Längsrichtung des genannten Objektes, Reste des Klebemittels der Klebeschicht an der Außenseite des Objektes anhaften bleiben und frei zugänglich sind, was ebenfalls zu einer Anhaftung von Schmutz- oder Fremdpartikeln führen würde. Durch den seitlichen Überstand der Trägerschicht über die Klebeschicht, welcher an beiden Seitenkanten der Trägerschicht bzw. des Klebebandes gegeben ist, werden somit Anhaftungen von Partikeln oder dergleichen vermieden. Hierdurch wird zudem das langgestreckte Objekt besser geschützt, da beispielsweise eine Beschädigung des langgestreckten Objektes durch die genannten Partikel, beispielsweise in Form von Abrieb, Bildung von Riefen oder anderen mechanischen Beeinträchtigungen vermieden. Zudem ist die Schutzeinrichtung hierdurch konstruktiv besonders einfach aufgebaut, da beispielsweise eine zusätzliche Umhüllung der Schutzeinrichtung, um diese vor Anhaftungen von Partikeln zu schützen, nicht erforderlich ist. Zudem ist die Schutzeinrichtung nach wie vor besonders einfach handhabbar, nämlich durch Umfassen bzw. einlagiges Umwickeln des langgestreckten Objektes mit dem Klebeband und Verhaftung der beiden zumindest im Wesentlichen oder exakt kongruent zueinander angeordneten Seitenkantenbereiche des Klebebandes miteinander. Hierdurch kann somit zuverlässig eine etwaige Verschiebung der beiden Seitenkantenbereiche des Klebebandes zueinander toleriert werden, welche sich dadurch in besonderem Maße ergeben kann, dass durch den Kontakt Klebeschicht-Klebeschicht unter Einwirkung von Scherkräften auf den genannten Verbindungsbereich parallel zu den Flächen der Klebeschichten diese sich unter Umständen leichter gegeneinander verschieben können, als bei einer unmittelbaren Verhaftung der Klebeschicht eines Seitenkantenbereiches der Trägerschicht mit einem klebemittelfreien Bereich des anderen Trägerschichtseitenkantenbereichs. Dies gilt insbesondere dann, wenn die Haftkraft zwischen Klebeschicht und Klebeschicht der beiden Seitenkantenbereiche geringer ist als die Haftkraft der Klebeschicht zu dem Trägerband oder zu einer anderen Schicht des Klebebandes (beispielsweise eine etwaige Zwischenschicht). Dies kann beispielsweise insbesondere dann gelten, wenn die Verhaftung der beiden Klebeschichtbereiche miteinander nicht zu einer homogenen Verbindung der Klebeschichten in Art einer "Verschmelzung" derselben miteinander führt.

In Montageanordnung der Schutzeinrichtung umfasst somit das Klebeband das oder die umfassten langgestreckten Objekte somit in Art einer vorzugsweise einlagigen Schlaufe.

In Montageanordnung der Schutzeinrichtung sind die beiden gegenüberliegenden Seitenkanten des Klebebandes vorzugsweise zumindest im Wesentlichen parallel zueinander angeordnet, besonders bevorzugt zumindest im Wesentlichen oder exakt aneinander anliegend. Vorzugsweise sind die beiden Seitenkanten geradlinig angeordnet.

In Montageanordnung der Schutzeinrichtung sind die beiden klebemittelfreien Bereiche des Klebebandes an den Seitenkanten, welche an die beiden gegenüberliegenden Seitenkanten des Klebebandes angrenzen, vorzugsweise zumindest im Wesentlichen konkruent zueinander angeordnet, also einander zumindest im Wesentlichen exakt einander überdeckend.

In Montageanordnung der Schutzeinrichtung sind die beiden gegenüberliegenden Seitenkanten des Klebemittelbereichs, welche von den Seitenkanten des Klebebandes beabstandet angeordnet ist, vorzugsweise zumindest im Wesentlichen parallel zueinander angeordnet, besonders bevorzugt zumindest im Wesentlichen oder exakt aneinander anliegend.

Beide Seitenkanten des Klebemittelbereichs sind in Montageanordnung der Schutzeinrichtung vorzugsweise von beiden Seitenkanten des Klebebandes beabstandet angeordnet, so dass kein Klebemittel der Klebemittelschicht nach Außen vortritt bzw. nicht von der Trägerschicht überdeckt wird.

Vorzugsweise ist die Klebeschicht von beiden Seitenkanten des Klebebandes um jeweils ≥ 1 mm beabstandet angeordnet. Dies hat sich für viele Fälle bereits als ausreichend erwiesen, um zu verhindern, dass Klebemittel der Klebeschicht seitlich von dem Klebeband bzw. der Schutzeinrichtung austritt. Insbesondere hat sich dies in vielen Fällen bereits als ausreichend erwiesen, wenn die Schutzeinrichtung in Fahrzeugen wie Kraftfahrzeugen eingesetzt wird, bei welchen beim Betrieb des Fahrzeuges die Schutzeinrichtung Krafteinwirkungen wie in Form von Erschütterungen usw. eingesetzt wird. Um die Zuverlässigkeit der erfindungsgemäßen Maßnahme zu verbessern, ist bevorzugt die Klebeschicht von beiden Seitenkanten des Klebebandes um jeweils ≥ 2mm oder ≥ 3mm beabstandet, beispielsweise ca. 5mm. Es versteht sich, dass die Klebeschicht auch um ≥ 5mm von den beiden Seitenkanten des Klebebandes beabstandet sein kann, eine Grenze ist hier dadurch gegeben, dass die Klebewirkung des Verhaftungsbereiches der beiden Enden des Klebebandes noch ausreichend stark ist. Eine Beabstandung der Klebeschicht von den beiden Seitenkanten des Klebebandes um ≥ 10mm, gegebenenfalls auch ≥ 8mm ist zumeist nicht notwendig, wenn auch prinzipiell nicht von der Erfindung ausgeschlossen, wobei eine zu große Beabstandung der Klebeschicht von den Seitenkanten unter Umständen auch zu Aufkräuselungen der Seitenränder des Klebebandes führen kann, da die beiden Seitenkantenbereiche des Klebebandes im Bereich der Seitenkanten nicht mehr miteinander verhaftet sind. Dies gilt insbesondere, wenn die Seitenkanten des Klebebandes freiliegen, also außerhalb der Durchbrechung oder Durchtrittsöffnung des Bauteils angeordnet sind, durch welche das langgestreckte Objekt geführt ist (entsprechendes gilt bei der Durchführung des Objektes zwischen zwei aneinander angrenzenden Bauteilen des Vorrichtung).

Vorzugsweise ist die Klebeschicht um ≥ 2% der Breite des Klebebandes von jeder der beiden Seitenkanten des Klebebandes beabstandet angeordnet, besonders bevorzugt um ≥ 4% oder ≥ 6%, beispielsweise ca. 10%. Die Beabstandung der Klebeschicht von jeder der Seitenkanten des Klebebandes kann insbesondere ≤ 25% oder ≤ 20% betragen, insbesondere ≤ 15%. Hierdurch wird einerseits sichergestellt, dass das Klebematerial der Klebeschicht nicht seitlich oder außenseitig an dem Klebeband freiliegend hervortritt - bspw. bei nicht exakter konkruenter Anordnung des beiden Klebebandseitenkantenbereiche zueinander oder bei Verschiebung derselben zueinander - und andererseits auch im Bereich der Seitenkanten des Klebebandes eine ausreichende Verhaftung sichergestellt ist.

Das Klebeband kann beispielsweise eine Länge von ≥ 50mm oder ≥ 75mm aufweisen, vorzugsweise eine Länge von ≥ 100mm, was allgemein im Rahmen der Erfindung gelten kann. Die Länge des Klebebandes kann je nach Durchmesser des langgestreckten Objektes bzw. des Bündels mehrerer langgestreckter Objekte auch größer sein, beispielsweise bis zu 200mm oder bis zu 300mm oder mehr, ohne hierauf beschränkt zu sein.

Vorzugsweise ist die Klebeschicht symmetrisch an der Trägerschicht bzw. zur Längsrichtung der Trägerschicht angeordnet, so dass die beiden Seitenränder der Klebeschicht gleich weit von den Seitenkanten der Trägerschicht bzw. des Klebebandes beabstandet angeordnet sind und/oder die beiden klebemittelfreien Bereiche der Trägerschicht angrenzend an die Klebemittelschicht die gleiche Flächengestalt aufweisen, also bzw. die gleiche Breite und gleiche Form aufweisen, wobei diese beiden als streifenförmige Bereiche ausgebildet sein können und eine (langgestreckte) rechteckige Form aufweisen können. Vorzugsweise ist das Klebeband spiegelsymmetrisch zu seiner Längsachse ausgebildet.

Die Seitenkanten der Klebeschicht können allgemein im Rahmen der Erfindung parallel zu den Seitenkanten des Klebebandes bzw. der Trägerschicht verlaufen.

Nach einer besonders bevorzugten Ausführungsform erstreckt sich die Klebeschicht bis zu beiden Stirnkanten des Klebebandes hin. Hierdurch kann das Klebeband der Schutzeinrichtung durch Ablängung eines langen Vorratsbandes besonders einfach hergestellt werden, wobei das Vorratsband eine vielfache Länge des Klebebandes der Schutzeinrichtung aufweisen kann.

Nach einer anderen vorteilhaften Ausführungsform ist die Klebeschicht von zumindest einer oder beiden Stirnkanten des Klebebandes beabstandet angeordnet, vorzugsweise um jeweils ≥ 1 mm oder ≥ 2mm, besonders bevorzugt um ≥ 3mm, beispielsweise ca. 5mm oder mehr. Der stirnseitige Abstand ist vorzugsweise ≤ 10mm, ohne hierauf beschränkt zu sein. Durch die Beabstandung der Klebeschicht von zumindest einer oder beiden Stirnkanten des Klebebandes wird erzielt, dass auch bei nicht exakter Montage des Klebebandes in Anwendung der Schutzeinrichtung oder bei gewissen Verschiebungen der Seitenkantenbereiche des Klebebandes zueinander, beispielsweise beim Betrieb oder der Bewegung einer Vorrichtung wie eines Fahrzeuges, Klebematerial der Klebeschicht an den Stirnkanten des Klebebandes freiliegt, was ebenfalls zur Anhaftung von Partikeln oder anderen Fremdstoffen führen könnte.

Besonders bevorzugt bildet die Trägerschicht die Längen- und Breitenabmessung des Klebebandes aus, durch die Trägerschicht wird somit die Längen- und Breitenerstreckung des Klebebandes definiert. Die Seitenkanten und Stirnkanten des Klebebandes fallen somit mit den Seiten- und Stirnkanten der Trägerschicht zusammen. Hierdurch ist insgesamt ein besonders einfacher Aufbau und zugleich einfache Handhabung des Klebebandes gegeben.

Im Allgemeinen im Rahmen der Erfindung ist die Seitenkantenlänge des Klebebandes ein Vielfaches größer als die Breite desselben (bzw. als die Länge der Stirnkanten), bspw. mehr als das Doppelte oder mehr als das Dreifache.

Vorzugsweise ist die Trägerschicht einteilig ausgebildet, wodurch das Klebeband und damit auch die Schutzeinrichtung besonders einfach aufgebaut sind. Gegebenenfalls kann die Trägerschicht jedoch auch aus mehreren Abschnitten bestehen, welche beispielsweise bezüglich der Quererstreckung des Klebebandes nebeneinander angeordnet sein können.

Vorzugsweise besteht die Trägerschicht zumindest teilweise oder vollständig aus einem reversibel komprimierbaren Material wie beispielsweise Vlies oder Schaumstoff. Die Trägerschicht kann hierdurch eine Art Pufferschicht darstellen, welche Einwirkungen des Bauteils der Vorrichtung, an welchen die Schutzeinrichtung befestigt ist, oder von anderen in der Nähe der Schutzeinrichtung angeordneten Bauteilen, auffängt. Das von der Schutzeinrichtung umfasste langgestreckte Objekt wird hierdurch zuverlässig vor äußeren Einwirkungen geschützt.

Besonders bevorzugt besteht die Trägerschicht zumindest teilweise oder vollständig aus Schaumstoffmaterial, was einerseits kostengünstig ist. Ferner wird hierdurch das umfasste langgestreckte Objekt zuverlässig geschützt, zum einen in Bezug auf eine Pufferwirkung der Trägerschicht, wie oben dargelegt, zum anderen dahingehend, dass die Trägerschicht eine durchgehende Schutzschicht um das langgestreckte Objekt ausbildet, um Fremdstoffe wie Partikel von diesem fernzuhalten. Besonders bevorzugt besteht die Trägerschicht zumindest teilweise oder vollständig aus einem gemischtzelligen oder geschlossenzelligen Schaumstoffmaterial, gegebenenfalls auch aus einem offenzelligen Schaumstoffmaterial. Als gemischtzelliger Schaumstoff ist ein solcher anzusehen, welcher im Wesentlichen nur teilweise offene Zellen oder offene und geschlossene Zellen aufweist. Als gemischtzelliger Schaumstoff im Rahmen der Erfindung kann insbesondere ein solcher aufgefasst werden, welcher eine Luftdurchlässigkeit von ≥ 25 l/m²s oder ≥ 50 l/m²s oder auch ≥ 100 l/m²s oder ≥ 150 l/m²s aufweist, beispielsweise 200 l/m²s. Allgemein kann die Luftdurchlässigkeit des Schaumstoffmaterials ≤ 1000 l/m²s oder ≤ 800 l/m²s betragen, insbesondere ≤ 700 l/m²s oder ≤ 600 l/m²s oder auch ≤ 450 l/m²s. Dies bezieht sich jeweils auf einen Schaumstoff in nicht imprägnierter Form. Allgemein im Rahmen der Erfindung bezieht sich die Angabe der Luftdurchlässigkeit auf eine Bestimmung unter den Normbedingungen eines 10 mm dicken Schaumstückes (vollständig entspannt) bei einem Mess-Unterdruck von 0,5 mbar, Prüffläche 100cm²; Frank-Gerät 21443; DIN EN ISO 9237. Ein solcher gemischtzelliger Schaumstoff kann insbesondere ein PU-Schaum sein. Ein gemischtzelliger Schaumstoff hat sich besonders bewährt, da dieser eine gute Schutzwirkung auch gegen Fremdpartikel und als Puffermedium gegenüber dem Bauteil aufweist und zudem die Klebemittelschicht auf diesem besonders gut haftet, auch wegen eines Eingriffs des Klebemittels in die Zellen des Schaumstoffmaterials.

Gegebenenfalls kann die Trägerschicht aus mehreren Lagen bestehen, wobei zumindest eine der Lagen aus einem reversibel komprimierbaren Material wie insbesondere Vlies oder Schaumstoff, insbesondere geschlossenzelliger oder gegebenenfalls offenzelliger Schaumstoff, besteht. Es ist jedoch in vielen Fällen ausreichend, wenn die Trägerschicht nur einlagig ausgebildet ist.

Vorzugsweise weist die Trägerschicht eine Dicke von ≥ 0,5mm oder ≥ 1 mm auf, besonders bevorzugt eine Dicke von ≥ 2mm, beispielsweise ca. 3mm. Hierdurch wird eine ausreichende Puffer- bzw. Absorber-Wirkung der Trägerschicht erzielt. Vorzugsweise ist die Dicke der Trägerschicht ≤ 5mm oder gegebenenfalls auch ≤ 7mm oder ≤ 10mm, wobei eine zu große Schichtdicke einen zunehmenden Raumbedarf der Schutzeinrichtung bedingt, ohne in Bezug auf die Pufferwirkung weitere Verbesserungen zu bewirken.

Bevorzugt ist die Klebeschicht als Selbstklebeschicht ausgebildet, so dass eine Verhaftung der beiden Seitenkantenbereiche auf einfache Weise durch Aneinanderdrücken derselben erzielbar ist. Das Klebemittel der Selbstklebeschicht kann insbesondere druckaktivierbar sein.
Gegebenenfalls kann die Trägerschicht auf der der Kleberschicht abgewandten Außenseite eine dauerhaft befestigte Schutzlage aufweisen, welche beispielsweise das Trägerschichtmaterial zusätzlich gegen Abrieb oder äußere Einwirkungen schützt, auch wenn dies oftmals nicht erforderlich ist. So kann bspw. durch die Schutzlage auch bei einem Material der Trägerschicht aus einem vergleichsweise offenporigem Material eine geschlossene außenseitige Schutzschicht ausgebildet sein. Gegebenenfalls kann die Trägerschicht eine durchgehende Außenhaut aufweisen, insbesondere in Ausbildung aus einem Schaumstoffmaterial, wodurch die Außenseite der Trägerschicht bereits geschlossen ist und eine Schutzlage ausbildet. Eine Schutzlage oder Außenhaut ist gegebenenfalls aber auch entbehrlich, insbesondere bei einem gemischtzelligem Schaum nicht zu hoher Luftdurchlässigkeit.

Vorzugsweise besteht das Klebeband lediglich aus der Trägerschicht und der Klebeschicht, wobei jedoch auch weitere Lagen vorgesehen sein können, beispielsweise in Form von Zwischenlagen zwischen Trägerschicht und Klebeschicht oder in Form von Lagen, welche auf der der Klebeschicht abgewandten Seite der Trägerschicht angeordnet sind, beispielsweise in Form einer Schutzlage, auch wenn diese zumeist nicht erforderlich sind.

Vorzugsweise ist die Klebeschicht als zusammenhängende, durchgehende Schicht ausgebildet, die Klebeschicht kann sich hierbei durchgehend und vollflächig zwischen den seitlichen Begrenzungskanten derselben erstrecken. Gegebenenfalls kann die Klebeschicht jedoch auch aus mehreren voneinander getrennten Teilabschnitten bestehen, welche beispielsweise in Längsrichtung des Klebebandes nebeneinander angeordnet sind.

Ferner umfasst die Erfindung eine als Wickel angeordnete Schutzeinrichtung, wobei die Schutzeinrichtung erfindungsgemäß ausgebildet ist. Die Schutzeinrichtung ist ferner als einlagiger Wickel ausgebildet ist, wobei die Seitenkanten des Klebebandes zumindest im Wesentlichen längs zueinander und vorzugsweise geradlinig angeordnet sind und wobei die Stirnkanten des Klebebandes jeweils schlaufenförmig unter Erzeugung des Wickels umgebogen sind. Die beiden Seitenkantenbereiche des Klebebandes sind miteinander verhaftet, ohne dass Flächenbereiche der Klebemittelschicht des Klebebandes nach Außen hervortreten. Freitretende, flächige Bereiche der Klebemittelschicht an den Seitenkanten des Klebebandes werden somit vermieden, die Klebemittelschicht ist in Bezug auf deren Fläche stets von Bereichen der Trägerschicht zur Außenseite des Wickels hin überdeckt. Dies schließt hierbei nicht aus, dass die Klebemittelschicht bis an die Stirnkanten des Klebebandes heranreichen kann, so dass die Klebemittelschicht lediglich seitlich sichtbar ist bzw. an der Seite des Wickels angeordnet ist, vorzugsweise aber auch natürlich seitlich nicht vom Wickel vorsteht.

Das langgestreckte Objekt im Rahmen der Erfindung kann beispielsweise ein elektrisches Kabel, anderes Signal übertragendes Kabel wie beispielsweise Glasfaserkabel oder dergleichen darstellen, eine Leitung wie eine ein fluides Medium wie insbesondere Gas oder Flüssigkeit, beispielsweise auch Hydraulikflüssigkeit, führende Leitung oder ein langgestrecktes Profil wie beispielsweise eine Kunststoffleiste, Schnur, Draht oder dergleichen sein. Das "langgestreckte Objekt" im Sinne der Erfindung kann jeweils insbesondere auch ein Bündel derartiger langgestreckter Objekte sein, wobei die Objekte jeweils in Längsrichtung zueinander verlaufen, also im Wesentlichen parallel zueinander ausgerichtet sein können. Das jeweilige Bündel kann jeweils zumindest eines oder mehrere der oben genannten Objekte umfassen oder aus diesen bestehen, wobei das Bündel von dem Klebeband schlaufenförmig umfasst ist, unter Ausbildung des beschriebenen Wickels und schleifenförmiger Anordnung des Klebebandes. Die beiden Seitenkantenbereiche des Klebebandes sind gemäß den Ansprüchen 1 bzw. 14 miteinander verhaftet sind.

Ferner umfasst die Erfindung eine Schutzeinrichtung nach Anspruch 18, wobei das Klebeband zumindest eines oder mehrerer gebündelte langgestreckte Objekte umfasst.

Ferner umfasst die Erfindung eine Schutzeinrichtung, welche an einem Bauteil festgelegt ist, beispielsweise an einem Teil eines Fahrzeuges oder einer anderen bewegten Vorrichtung. Die Schutzeinrichtung bzw. das oder die langgestreckten Objekte können jeweils das Bauteil durchdringen bzw. zwischen zwei aneinander angrenzenden Bauteilen durchgeführt sein oder die Schutzeinrichtung und das oder die von dieser umfassten langgestreckten Objekte können entlang des Bauteils geführt sein, beispielsweise an einer Außenseite desselben angeordnet sein.

Die Schutzeinrichtung kann jeweils neben dem Klebeband auch eine Befestigungseinrichtung zur Festlegung des Klebebandes an dem jeweiligen Bauteil umfassen, beispielsweise in Form einer entsprechenden Halterung, Kabelschelle oder dergleichen.

Die Erfindung wird nachfolgend beispielhaft beschrieben und erläutert. Es zeigen:
- Figur 1:: eine Draufsicht auf (Fig. 1a) und einen Querschnitt (Fig. 1b) eines Klebebandes einer erfindungsgemäßen Schutzeinrichtung,
- Figur 2:: ein Klebeband einer erfindungsgemäßen Schutzeinrichtung in Montageanordnung im Querschnitt,
- Figur 3:: Seiten- bzw. Querschnittsansichten einer erfindungsgemäßen Schutzeinrichtung in verschiedenen Montageanordnungen an einem Bauteil einer Vorrichtung.

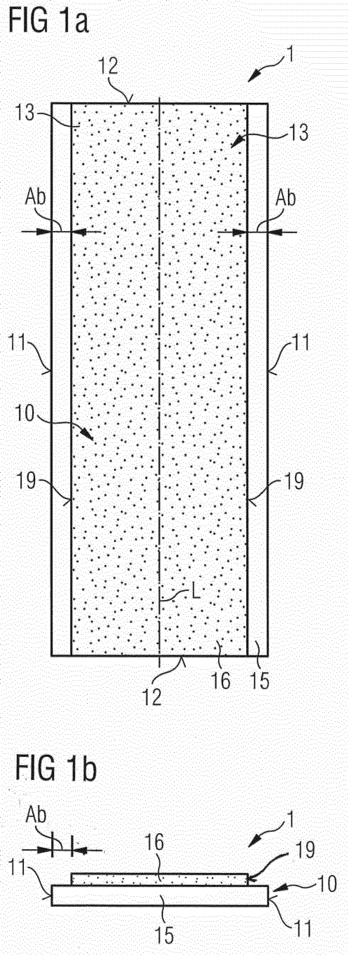

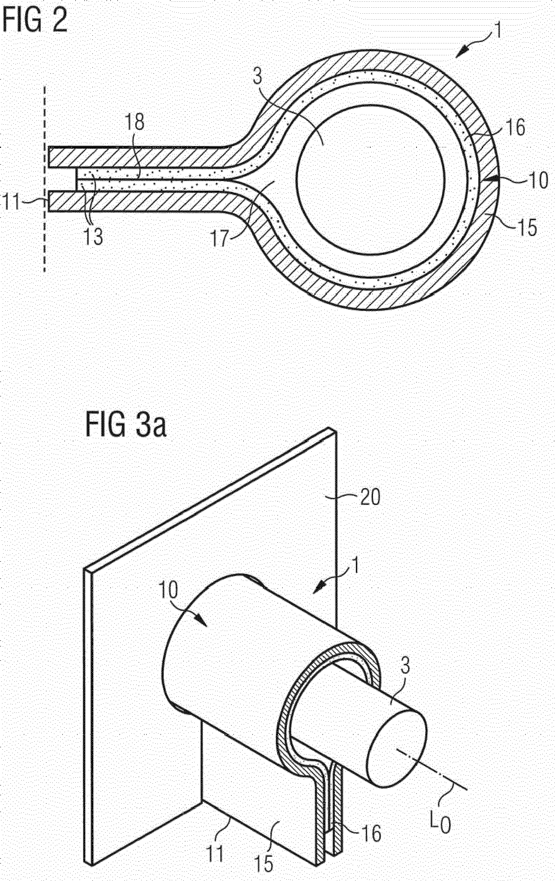

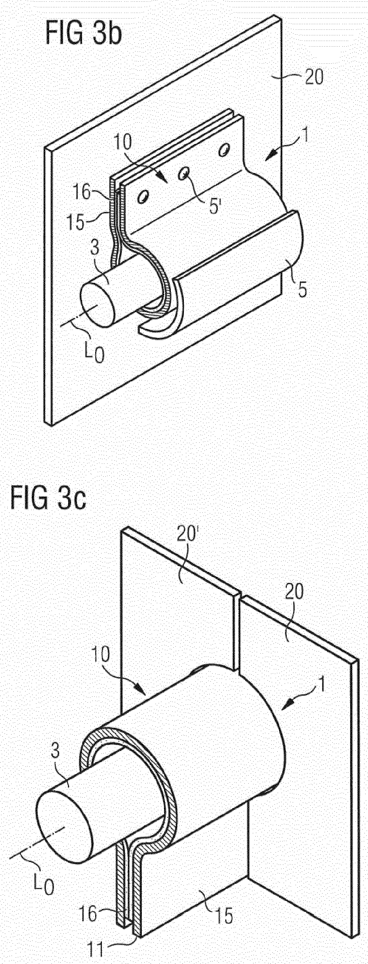

Die Figuren 1-3 zeigen eine erfindungsgemäße Schutzeinrichtung 1 bzw. ein Klebeband 10 derselben. Die Schutzeinrichtung 1 besteht nach dem Ausführungsbeispiel aus dem Klebeband 10, wobei gegebenenfalls Befestigungsmittel 5, 5' zur Festlegung des Klebebandes 10 an einem Bauteil 20 einer Vorrichtung umfasst sein können (Fig. 3). Die Schutzeinrichtung kann auch zwischen zwei Bauteilen 20, 20'einer Vorrichtung angeordnet sein (Fig. 3). Die Vorrichtung kann beispielsweise ein Fahrzeug wie Kraftfahrzeug sein, ohne hierauf beschränkt zu sein. Das Klebeband 10 umfasst (also umgibt) ein langgestrecktes Objekt 3, beispielsweise ein elektrisches Kabel oder ein Bündel derartiger Objekte wie z.B. ein Kabelbündel.

Das Klebeband 10 weist gemäß Figur 1 zwei in Bandlängsrichtung L verlaufende Seitenkanten 11 auf sowie zwei Stirnkanten 12, welche an gegenüberliegenden Enden des Klebebandes 10 angeordnet sind und welche insgesamt das Klebeband begrenzen. Das Klebeband weist hierbei einen rechteckigen Zuschnitt auf, was allgemein im Rahmen der Erfindung gegeben sein kann, ohne hierauf beschränkt zu sein. Das Klebeband 10 weist eine Trägerschicht 15 auf, welche auf einer Seite, also einer Großfläche, außenseitig mit einer Klebeschicht 16 versehen ist. Das Klebeband 10 ist hierbei derart dimensioniert, um bezogen auf dessen Wickelrichtung, das Objekt 3 quer zur Objektlängsrichtung Lo zu umwickeln (Fig. 2, 3), so dass in Schutzanordnung das Klebeband das langgestreckte Objekt also schlaufenförmig umgibt. Die Längsrichtung L des Klebebandes 10 ist somit nach dem Ausführungsbeispiel oder allgemein im Rahmen der Erfindung zumindest im Wesentlichen in Objektlängsrichtung Lo angeordnet, wobei gegebenenfalls das langgestreckte Objekt sich auch nicht-geradlinig durch die Schlaufe 17 des Klebebandes erstrecken kann. Die Breite des Klebebandwickels, also das Klebeband 10 in schlaufenförmiger Anordnung, in welcher dieses das Objekt 3 umfasst, ist hierbei gleich der Länge des Klebebandes. Die beiden den Seitenkanten 11 des Klebebandes benachbarten Bereiche (Seitenkantenbereiche 13) sind hierbei mittels der auf einer Seite des Klebebandes 10 bzw. der Trägerschicht 15 angeordneten Klebeschicht 16 miteinander verhaftet, unter Ausbildung eines Verhaftungsbereichs 18 (Fig. 2). Der Verhaftungsbereich 18 ist somit nach dem Ausführungsbeispiel unter Ausbildung eines Kontaktes Klebeschicht-Klebeschicht, nämlich durch Verhaftung der Klebeschichtbereiche an den beiden Seitenkantenbereichen 13 des Klebebandes, erzeugt, wodurch die schlaufenförmige Umfassung des langgestreckten Objektes 3 durch das Klebeband 10 ausgebildet wird. Die Seitenkanten 11 des Klebebandes im Wickel verlaufen somit zumindest im Wesentlichen parallel zueinander und zumindest im Wesentlichen parallel zu dem Objekt 3. Der Begriff "im Wesentlichen" heißt hier, dass gewisse Toleranzen gegeben sein können, welche gerade durch die erfindungsgemäße Ausbildung des Klebebandes akzeptabel sind, wobei die flächige, freiliegende Oberseite der Klebeschicht nicht nach Außen vortreten soll. Die Stirnkanten 12 umfassen das Objekt 3 schlaufenförmig. Gegebenenfalls - auch allgemein im Rahmen der Erfindung - kann sich die Klebeschicht auch nur über einen Teil der Länge des Klebebandes erstrecken und die Klebeschicht mit einem klebemittelfreien Bereich des gegenüberliegenden Seitenkantenbereichs 11 des Klebebandes verhaftet sein, unter Ausbildung eines Kontaktes Trägerschicht-Klebeschicht, auch wenn diese Ausführungsform weniger bevorzugt ist.

Die Klebeschicht 16 ist wie aus Figur 1 ersichtlich von beiden Seitenkanten 11 des Klebebandes 10 beabstandet angeordnet, wobei die beiden Abstände Ab des Klebebandes zu den Seitenkanten 11 hier gleich groß sind. Die Klebeschicht 16 ist somit symmetrisch zwischen den beiden Seitenkanten 11 des Klebebandes 10 angeordnet. Hierdurch wird vermieden, dass Klebematerial der Klebeschicht 16 zur freiliegenden Anordnung kommt, also beispielsweise von den Stirnkanten 11 des Klebebandes vortritt oder nicht von einem Bereich der Trägerschicht 15 außenseitig überdeckt wird. Dies bei herkömmlich eingesetzten Klebebändern leicht der Fall, da die langen Seitenkanten 11 sehr exakt zueinander ausgerichtet werden müssen. Bei der erfindungsgemäßen Ausbildung wird auf besonders einfache Weise verhindert, dass auch bei nicht exakter Montage des Klebebandes oder bei längerem Betrieb der das langgestreckte Objekt umfassenden Vorrichtung Klebematerial der Klebeschicht freiliegt und etwaige Partikel oder Fremdstoffe anhaften kann, welche auf Dauer die Funktionsweise der Schutzeinrichtungen und/oder das langgestreckte Objekt beeinträchtigen oder beschädigen könnten.

Wie in Figur 1 gezeigt ist die Klebeschicht 16 von beiden Seitenkanten 11 des Klebebandes 10 bzw. der Trägerschicht 15 beabstandet, nach dem Ausführungsbeispiel jeweils gleich weit beabstandet. Die beiden klebemittelfreien Bereiche an den Rändern des Klebebandes bzw. der Trägerschicht, welche zwischen den Seitenkanten 11 und der Klebeschicht angeordnet sind, sind also gleich breit und haben die gleiche Formgestalt. Die beiden Seitenkanten 11 des Klebebandes bzw. der Trägerschicht einerseits verlaufen zu den beiden Seitenkanten der Klebeschicht parallel.

Der Abstand Ab der Klebeschicht von den beiden Seitenkanten des Klebebandes 10 bzw. der Trägerschicht 15 ist ≥ 1 mm, beispielsweise ca. 5mm. Der Abstand der Klebeschicht 16 von den Seitenkanten 11 des Klebebandes 10 bzw. der Trägerschicht 15 beträgt nach dem Ausführungsbeispiel jeweils ca. 10%. Gemäß dem Ausführungsbeispiel weist das Klebeband somit eine Breite von ca. 55mm auf, die Klebeschicht eine Breite von ca. 45mm. Nach dem Ausführungsbeispiel beträgt die Länge des Klebebandes ca. 140mm. Die Trägerschicht weist nach dem Ausführungsbeispiel eine Dicke von ca. 3mm auf.

Gemäß Figur 1 erstreckt sich die Klebeschicht 16 in Längsrichtung L des Klebebandes 10 bis zu den beiden Stirnkanten 12, so dass das Klebeband 10 somit beispielsweise durch Ablängen eines langen Vorratsbandes, dessen Länge ein Vielfaches der Länge des Klebebandes ist, hergestellt werden kann. Gegebenenfalls kann die Klebeschicht auch von zumindest einer oder beiden der Stirnkanten 12 des Klebebandes 10 beabstandet sein, beispielsweise um ≥ 1 mm.

Die Trägerschicht 15 bildet hierbei die Abmessungen des Klebebandes 10 aus, so dass die Seitenkanten und Stirnkanten des Klebebandes zugleich Seitenkanten und Stirnkanten der Trägerschicht darstellen.

Die Trägerschicht ist hier einteilig ausgebildet. Die Trägerschicht besteht hier vollständig (gegebenenfalls auch nur teilweise) aus einem reversibel komprimierbaren Material, im speziellen aus einem Schaumstoffmaterial. Das Schaumstoffmaterial ist hier gemischtzellig ausgebildet und weist eine Luftdurchlässigkeit von ca. 500 l/m²s unter den genannten Prüfbedingungen auf. Eine Imprägnierung des Schaumstoffmaterials ist in der Regel nicht erforderlich, auch wenn diese unter Umständen gegeben sein kann, beispielsweise mit einem Brandschutzmittel.

Die Klebeschicht ist als Selbstklebeschicht ausgebildet, so dass die Verhaftung der beiden Seitenkantenbereiche 13 des Klebebandes durch Andrücken der an den Seitenkantenbereichen vorgesehenen Bereiche der Klebeschicht 16 ausgebildet sein kann.

Die Klebeschicht ist hier als zusammenhängende, durchgehende Schicht ausgebildet, welche sich vollflächig zwischen den Seitenkanten 19 der Klebeschicht 16 erstreckt.

Gegebenenfalls kann die Klebeschicht auch aus mehreren voneinander getrennten oder aneinander angrenzenden oder gegebenenfalls überlappenden Teilbereichen bestehen. Beispielsweise ist es denkbar, die Klebeschicht nur an den beiden miteinander zu verhaftenden Seitenkantenbereichen 13 des Klebebandes vorzusehen und einen mittleren Bereich des Klebebandes zwischen den beiden Seitenkantenbereichen 11 Klebemittel frei auszubilden.

Auf der der Klebeschicht 16 abgewandten Außenseite der Trägerschicht 15 kann ggf. eine weitere Schicht wie Schutzlage angeordnet.

Figur 2 zeigt die Schutzeinrichtung nach Fig. 1 in Montageanordnung, bei welcher das Klebeband entsprechend Anspruch 14 das langgestreckte Objekt 3 schlaufenförmig umgibt, wobei die beiden Seitenkantenbereiche 11 des Klebebandes miteinander verhaftet sind, ohne dass Flächenbereiche des Klebemittel der Klebemittelschicht des Klebebandes an den Seitenkanten 11 des Klebebandes nach Außen hervortreten. Die Klebemittelschicht 16 ist also in Bezug auf beide Seitenkanten 19 von beiden Seitenkanten 11 des Klebebandes bzw. der Trägerschicht beabstandet. Die beiden Seitenkantenbereiche 13 des Klebebandes sind derart miteinander verhaftet, dass die beiden Seitenkanten 19 der Klebeschicht 16 zumindest im Wesentlichen parallel und aufeinanderliegend angeordnet sind. Es versteht sich, dass durch die erfindungsgemäße Ausbildung die Klebeschicht senkrecht zur Klebefläche von der Trägerschicht 15 abgedeckt ist, so dass kein Klebemittel der Klebeschicht an den Seitenkanten 11 des Klebebandes nach Außen vorsteht. Die Klebeschicht kann allerdings ggf. bis an die Stirnkanten 12 des Klebebandes heranreichen.

Es ist in Figur 2 nur ein Objekt 3 dargestellt, oftmals in der Praxis aber ein Objektbündel gegeben.

Figur 3 zeigt die Anordnung der Schutzeinrichtung an einem Bauteil 20 einer Vorrichtung wie bspw. einem Fahrzeug. Das Bauteil kann insbesondere ein Blech, Verkleidungsbauteil o.dgl. sein. Gemäß Figur 3a ist das Klebeband mit seinen beiden Seitenkantenbereichen an dem Bauteil 20 angeordnet und durchdringt dieses. Alternativ kann beispielsweise auch das langgestreckte Objekt 3 mit dem umgebenden Teil der Schutzeinrichtung 1 in einem Befestigungsmittel 5 wie einer Halterung angeordnet sein und/oder mittels eines Befestigungsmittels 5'an dem jeweiligen Bauteil 20 festgelegt sein kann (Fig. 3b). Weiter kann beispielsweise die Schutzeinrichtung auch zwischen zwei Bauteilen 20, 20' der Vorrichtung angeordnet sein, wobei die beiden Bauteile eine Aufnahme für das langgestreckte Objekt 3 (bzw. ein entsprechendes Bündel) zusammen mit der Schutzeinrichtung 1 ermöglichen.

## Patentansprüche

1. Schutzeinrichtung für langgestreckte Objekte (3) wie Kabel, Leitungen oder langgestreckte Profile, wobei die Schutzeinrichtung (1) ein Klebeband (10) umfasst oder in Form eines Klebebandes (10) ausgebildet ist, wobei das Klebeband (10) durch zwei in Bandlängsrichtung (L) verlaufende Seitenkanten (11) mit angrenzenden Seitenkantenbereichen (13) und durch zwei Stirnkanten (12), welche an gegenüberliegenden Enden des Klebebandes (10) angeordnet sind, begrenzt ist, wobei das Klebeband (10) eine Trägerschicht (15) aufweist und auf einer Seite der Trägerschicht (15) eine außenseitig an dem Klebeband (10) angeordnete Klebeschicht (16) aufweist, wobei das Klebeband (10) dimensioniert ist, um in Schutzanordnung um das langgestreckte Objekt (3) dieses quer zu der Objektlängsrichtung einlagig zu umwickeln, so dass im Wickel die Stirnkanten des Klebebandes das langgestreckte Objekt schlaufenförmig umfassen und die Seitenkanten des Klebebandes zumindest im Wesentlichen längs zueinander und längs zur Längsrichtung des langgestreckten Objektes angeordnet sind und wobei die beiden Seitenkantenbereiche (13) des Klebebandes (10) mittels der auf einer Seite des Klebebandes (10) angeordneten Klebeschicht (16) miteinander unter Ausbildung eines Kontaktes Klebeschicht-Klebeschicht (16) verhaftet sind, **dadurch gekennzeichnet, dass** die Klebeschicht (16) von beiden Seitenkanten (11) des Klebebandes (10) beabstandet angeordnet ist.

2. Schutzeinrichtung nach Anspruch 1, **dadurch gekennzeichnet, dass** die Klebeschicht (16) von beiden Seitenkanten (11) des Klebebandes (10) um jeweils ≥ 1 mm beabstandet angeordnet ist, vorzugsweise um jeweils ≥ 2mm und/oder dass die Klebeschicht (16) von beiden Stirnkanten (12) des Klebebandes (10) beabstandet angeordnet ist, vorzugsweise um jeweils ≥ 1 mm..

3. Schutzeinrichtung nach Anspruch 1 oder Anspruch 2, **dadurch gekennzeichnet, dass** die Klebeschicht (16) sich bis zu beiden Stirnkanten (12) des Klebebandes (10) erstreckt.

4. Schutzeinrichtung nach einem der Ansprüche 1-3, **dadurch gekennzeichnet, dass** die Trägerschicht (15) die Längen- und Breitenabmessung des Klebebandes (10) ausbildet.

5. Schutzeinrichtung nach einem der Ansprüche 1-4, **dadurch gekennzeichnet, dass** die Trägerschicht (15) einteilig ausgebildet ist.

6. Schutzeinrichtung nach einem der Ansprüche 1-5, **dadurch gekennzeichnet, dass** die Trägerschicht (15) zumindest teilweise aus einem reversibel komprimierbaren Material wie insbesondere Vlies oder Schaumstoff besteht.

7. Schutzeinrichtung nach Anspruch 6, **dadurch gekennzeichnet, dass** das Schaumstoffmaterial der Trägerschicht eine Luftdurchlässigkeit von ≥ 25 l/m²s und/oder ≤ 1000 l/m²s aufweist.

8. Schutzeinrichtung nach einem der Ansprüche 1-7, **dadurch gekennzeichnet, dass** die Trägerschicht (15) eine Dicke von ≥ 0,5mm aufweist.

9. Schutzeinrichtung nach einem der Ansprüche 1-8, **dadurch gekennzeichnet, dass** die Klebeschicht (16) eine Selbstklebeschicht ist und/oder dass die Klebeschicht (16) als zusammenhängende, durchgehende Schicht ausgebildet ist.

10. Schutzeinrichtung nach einem der Ansprüche 1-9, **dadurch gekennzeichnet, dass** die Trägerschicht (15) auf der dem Klebeband (10) abgewandten Außenseite eine dauerhaft befestigte Schutzlage aufweist.

11. Schutzeinrichtung nach einem der Ansprüche 1-10, **dadurch gekennzeichnet, dass** die Schutzeinrichtung als einlagiger Wickel angeordnet ist, dass die Seitenkanten des Klebebandes zumindest im Wesentlichen längs zueinander und vorzugsweise geradlinig angeordnet sind und dass die Stirnkanten (12) des Klebebandes jeweils schlaufenförmig unter Erzeugung des Wickels umgebogen sind und dass die beiden Seitenkantenbereiche (13) des Klebebandes miteinander verhaftet sind.

12. Schutzeinrichtung nach Anspruch 11, **dadurch gekennzeichnet, dass** die beiden Seitenkantenbereiche (13) des Klebebandes miteinander verhaftet sind ohne dass Flächenbereiche der Klebemittelschicht des Klebebandes an den Seitenkanten (11) des Klebebandes nach Außen hervortreten.

13. Schutzeinrichtung nach einem der Ansprüche 11 oder 12, **dadurch gekennzeichnet, dass** die beiden Seitenkantenbereiche (13) des Klebebandes derart miteinander verhaftet sind, dass die beiden Seitenkanten (19) der Klebeschicht (16) zumindest im Wesentlichen parallel und aufeinanderliegend angeordnet sind.

14. Schutzeinrichtung nach einem der Ansprüche 1-13, **dadurch gekennzeichnet, dass** die Schutzeinrichtung ein oder mehrere gebündelte langgestreckte Objekte (3) wie Kabel, Leitungen oder langgestreckte Profile umfasst, wobei die Schutzeinrichtung quer zur Längsrichtung des umfassten langgestreckten Objektes (3) bzw. der umfassten langgestreckten Objekte, diese umwickelnd angeordnet ist, wobei der Wickel die Länge des Klebebandes (10) aufweist und die beiden Seitenkantenbereiche (11) des Klebebandes (10) mit der an derselben Außenseite der Trägerschicht (15) angeordneten Klebeschicht, welche dem oder den umfassten lang gestreckten Objekten zugewandt ist, miteinander unter Ausbildung eines Kontaktes Klebeschicht-Klebeschicht (16) verhaftet ist.

15. Schutzeinrichtung nach Anspruch 14 befestigt an einem Bauteil einer Vorrichtung, vorzugsweise eines Fahrzeuges.
